# EUROPEAN PATENT SPECIFICATION

(11) **EP 1 578 091 B1**
(45) Date of publication and mention of the grant of the patent: **30.11.2016**
(21) Application number: 05005661.3
(22) Date of filing: 15.03.2005
(51) Int. Cl.: H04M 1/60, H04M 1/725

(54) **METHOD OF RECOVERY FROM ABNORMAL STATE OF HANDSFREE PHONE SPEECH**
VERFAHREN ZUR WIEDERHERSTELLUNG EINES ANORMALEN ZUSTANDS WÄHREND EINES FREISPRECHTELEFONGESPRÄCHS
PROCÉDÉ DE REPRISE D'UN ÉTAT ANORMAL PENDANT UNE CONVERSATION TÉLÉPHONIQUE MAINS LIBRES

(30) Priority: 16.03.2004 JP 2004075410
(43) Date of publication of application: 21.09.2005
(73) Proprietor: NEC Corporation, Minato-ku Tokyo 108-8001 (JP)
(72) Inventor: Kawasaki, Haruo, Minato-ku, Tokyo (JP)
(74) Representative: Vossius & Partner Patentanwälte Rechtsanwälte mbB

(56) References cited:
- EP-A- 0 526 240
- EP-A- 1 283 633
- WO-A-01/95660
- WO-A-94/28689
- US-A- 5 239 571
- US-B1- 6 275 713

## Description

The present invention relates to a method of recovery from occurrence of an abnormal state during a handsfree phone speech, its recovery system, a handsfree phone device, and its control program, and more particularly to the method of recovery from the occurrence of the abnormal state during the handsfree phone speech which enables automatic re-establishment of a connection of communication lines and processing of providing a party on the other end of a phone with specified information about the occurrence of trouble (abnormal state), its recovery system, the handsfree phone device and its control program.

The present application claims priority of Japanese Patent Application No. 2004-075410 filed on March 16, 2004.

Since a conventional mobile phone is integrally constructed of its main body, microphone, and speaker, a user of the mobile, such as a phone cellular phone, has to continue holding the mobile phone in the user' s hand while a phone conversation with a party on the other end of the phone being in progress. However, in an environment, in particular, where the user is operating something, for example, driving a vehicle such as an automobile while being in a conversation on the mobile phone, not only this causes an inconvenience but also this is detrimental to safety to be ensured while the phone user is driving the automobile.

The Japanese Road Traffic Law (revised November 1, 1999), from a viewpoint of prevention of automobile accidents, demands that, the user of the mobile phone, if using the mobile phone while driving the automobile, is obliged to use a handsfree phone device. Therefore, the handsfree phone device is expected to come into widespread use in the future.

As technology that can be used for constructing the handsfree phone device, a short-distance wireless communication technology such as Bluetooth linking technology, wireless LAN (Local Area Network), and a like, in particular, is considered as promising. A reason for this is that the mobile phone unit is connected to a handsfree unit by radio, which removes limits imposed on connectors permitted to be employed between the mobile phone unit and handsfree unit and, therefore, the user can carry out a phone conversation using the mobile phone unit left as it is in a bag, pocket, or a like.

As described above, in ordinary cases, in the handsfree phone device, the handsfree unit is connected to the mobile phone unit by such a short-distance wireless communication line. Due to this, in some cases, disconnection of the wireless communication line caused by surrounding noises, electromagnetic waves, or a like occurs. The disconnection of the wireless communication line causes discontinuation of the phone conversation with a party on the other end of the phone and, therefore, some measures are required to solve this problem.

An example of such measures is disclosed in Japanese Patent Application Laid-open No. 2003-125461. EP 1 283 633 A is a European counter part thereof. According to the disclosed technology, when instantaneous chopping (an instantaneous power interruption) occurs in a local wireless communication area (short-distance communication wireless area) formed between a speech device (being equivalent to the handsfree unit described above) and a repeater (being equivalent to the mobile phone unit described above), switching is done from one microphone of the speech device that had been used immediately before the occurrence of the instantaneous chopping to another microphone of the repeater (mobile phone unit) and a phone conversation between the above speech device and a phone device of a party on the other end of the phone channel is made to be continued, while an attempt to re-establish a connection in the local wireless communication area is made.

Then, when a connection is re-established, the microphone of the handsfree phone device is again switched from the repeater to the speech device. Thus, according to the disclosed technology, a constant phone speech is maintained between the above speech device and a phone device of the party on the other end of the phone.

However, the above conventional technology has a problem. As described above, when instantaneous chopping occurs in the local wireless communication area, while, by doing switching of the microphone between the speech device that had been used and that of the repeater, the phone speech between the speech device and the phone device of the party on the other end of the phone is maintained and by retrying re-establishment the connection in the local wireless communication area, if the re-establishment is successful, switching of the microphone of the handsfree phone device is done from the repeater to the speech device, which enables the phone conversation to be continued.

However, if the communication line (channel) between the speech device and the phone device of the party on the other end of the phone is disconnected due to occurrence of an abnormal state in the local wireless communication area and/or of abnormal communications between the speech device and a base station on the communication network, the user of the hands free phone device cannot realize automatic re-establishment of the connection of the communication lines to recover from the above abnormal state of communications. Especially, in the environment where the user has to focus attention on the driving of the automobile and a like, such abnormal communications as above interfere with the re-establishment of the connection of communication lines and causes frustration to the party on the other end of the phone.

US 6, 275, 713 discloses a cellular phone with automatic call reestablishment which, when a communication channel is disconnected because of deterioration of field strength, waits for recovery of the field strength and reinitiate a call. No reference is made to the abnormal disconnection between said cellular phone and a handsfree unit. Call reestablishment notification means is provided for notifying the user of the cellular phone of call reestablishment before a call is initiated.

In view of the above, it is an object of the present invention to provide a method of recovery from an occurrence of an abnormal state during a handsfree phone speech which enables automatic re-establishment of a connection of communications lines and processing of providing a party on the other end of a phone line with specified information about the occurrence of trouble (abnormal state), its recovery system, a handsfree phone device and its control program.

The above object is achieved with the features of the claims.

With the claimed invention, recovery processing procedures are stored in advance as an insurance against abnormal termination of a handsfree speech caused by abnormalities in a short-distance wireless communication line between a handsfree unit and a mobile phone unit and restoration and emergency processing against the abnormal termination of the handsfree speech according to the stored recovery processing procedures is automatically performed and, therefore, specified processing can be performed by an oral instruction from a user without complicated operations by the user who was at a handsfree speech, which enables easy execution of the recovery processing and improvements in safety and workability in a handsfree speech environment.

The above recovery processing procedures may be stored in advance in a manner to correspond to the party on the other end of the phone at time of abnormal termination of the phone speech, and restoration and emergency processing can be automatically performed on the speech having ended abnormally by the stored recovery processing procedures corresponding to the party on the other end of the phone at time of the abnormal termination and, therefore, a unit that can perform flexible processing in a manner to correspond to the party on the other end of the phone can be constructed, not in a fixed manner, in the handsfree phone device.

The above and other objects, advantages, and features of the present invention will be more apparent from the following description taken in conjunction with the accompanying drawings in which:
Fig. 1 is a block diagram showing configurations of a handsfree phone device according to a first embodiment of the present invention;
Fig. 2 is a flowchart showing procedures for a recovery processing method to be adopted in the handsfree phone device according to the first embodiment;
Fig. 3 is a flowchart showing orders of operations to be performed by a handsfree unit making up the handsfree phone device according to the first embodiment;
Fig. 4 is a flowchart showing orders of operations to be performed by a mobile phone unit making up the handsfree phone device according to the first embodiment;
Fig. 5 is a flowchart showing operations between the handsfree unit and the mobile phone unit in the handsfree phone device to be performed, when a phone speech is in a normal state, according to the first embodiment;
Fig. 6 is a flowchart showing redialing operations between the handsfree unit and the mobile phone unit in the handsfree phone device to be performed, when the phone speech is in an abnormal state, according to the first embodiment;
Fig. 7 is a flowchart showing operations of transmitting information mail between the hands free unit and the mobile phone unit in the handsfree phone device when the phone speech is in the abnormal state, according to the first embodiment;
Fig. 8 is a flowchart showing operations of performing processing by voice instructions between the handsfree unit and the mobile phone unit in the handsfree phone device when the phone speech is in the abnormal state, according to the first embodiment;
Fig. 9 is a flowchart showing setting procedures of a recovery processing method to be used by a handsfree phone device according to a second embodiment of the present invention;
Fig. 10 is a flowchart operating orders of a mobile phone unit making up the handsfree phone device according to the second embodiment;
Fig. 11 is a flowchart showing setting procedures of a recovery processing method to be employed in a handsfree phone device according to a third embodiment of the present invention; and
Fig. 12 is a flowchart of operating orders of a mobile phone unit making up the handsfree phone device according to the third embodiment.

Best modes of carrying out the present invention will be described in further detail using various embodiments with reference to the accompanying drawings. Procedures for recovery to be carried out when abnormal communications occur in a short-distance wireless communication line between a handsfree unit and a mobile phone unit are stored in advance in a storage device, and automatic restoration and/or emergency processing is performed when a phone speech has come to an abnormal termination in the recovery procedure.

### First Embodiment

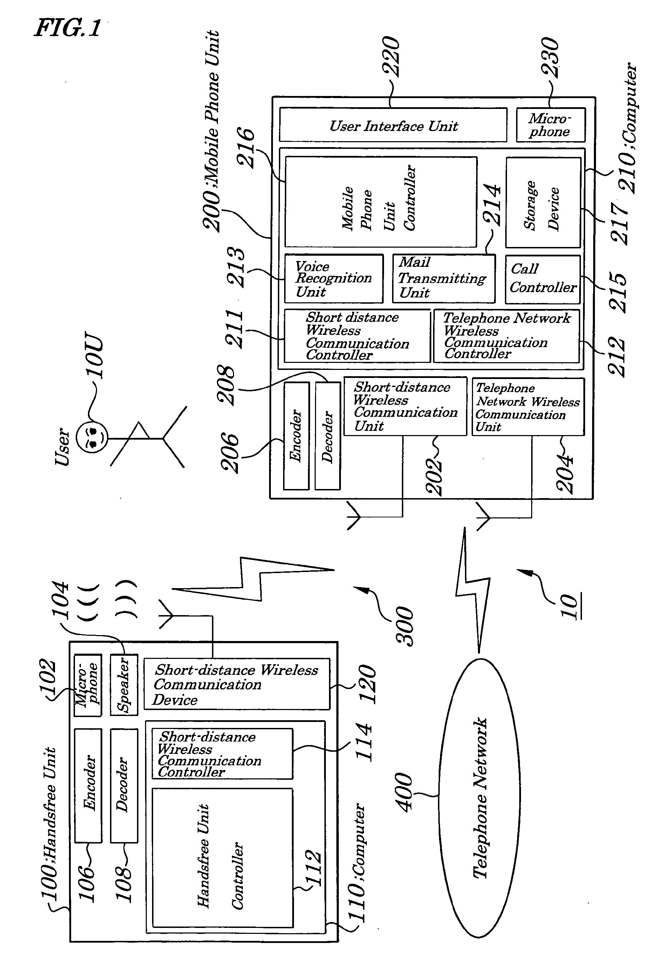

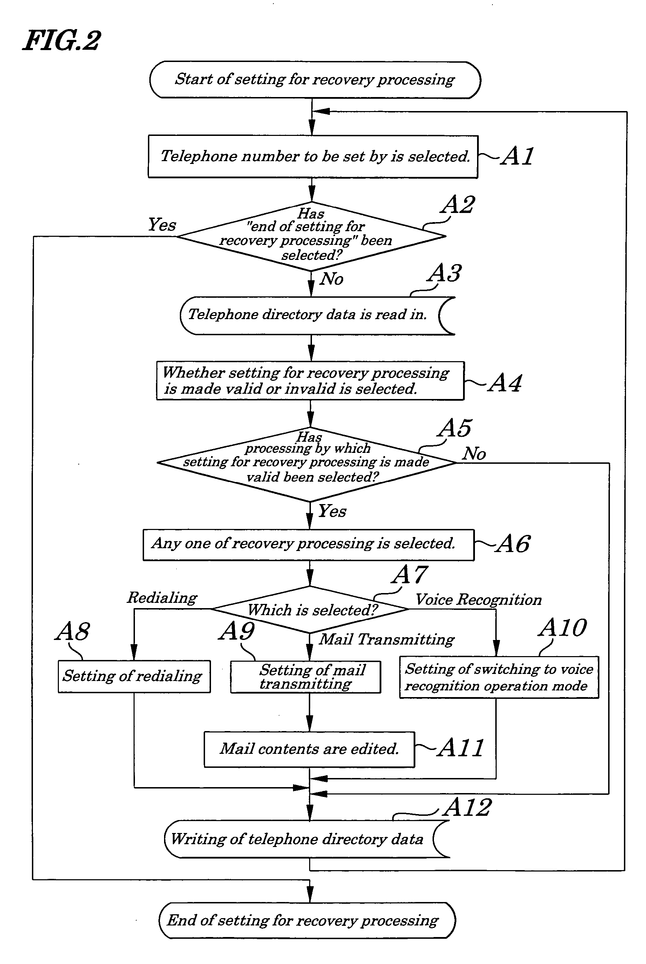

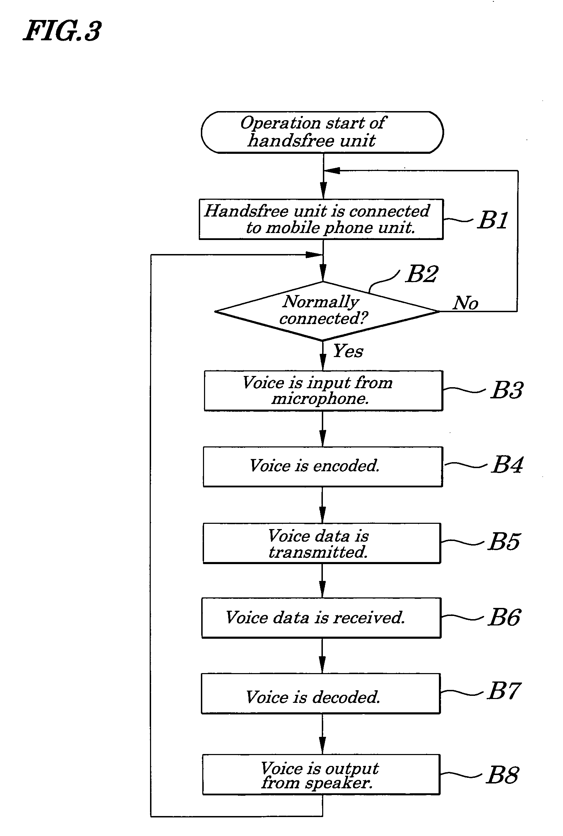

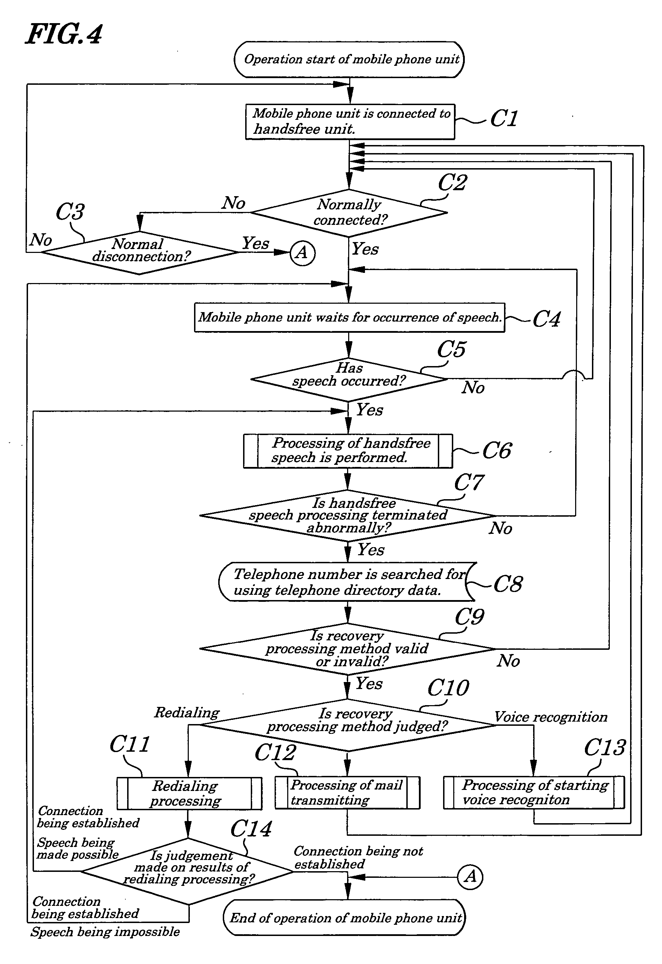

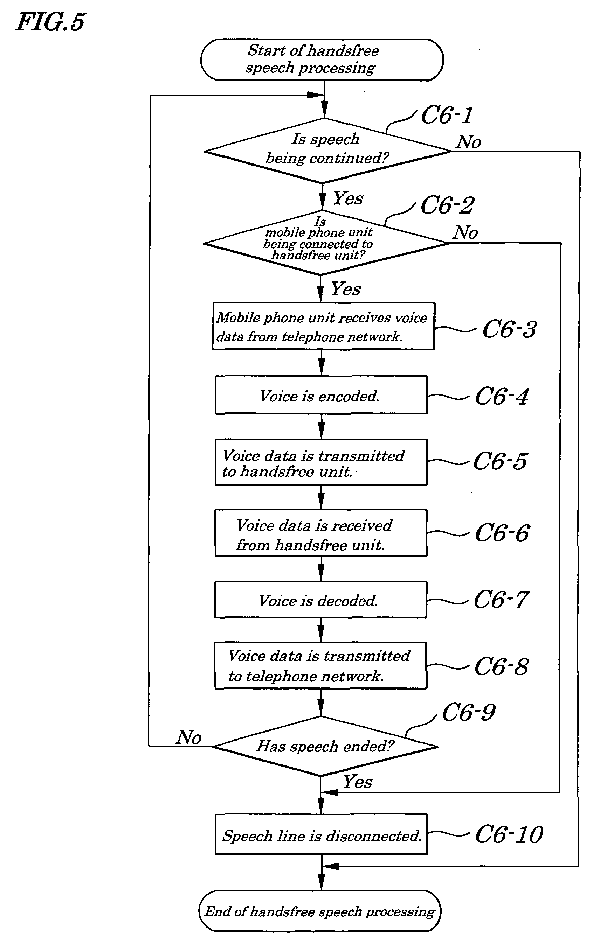

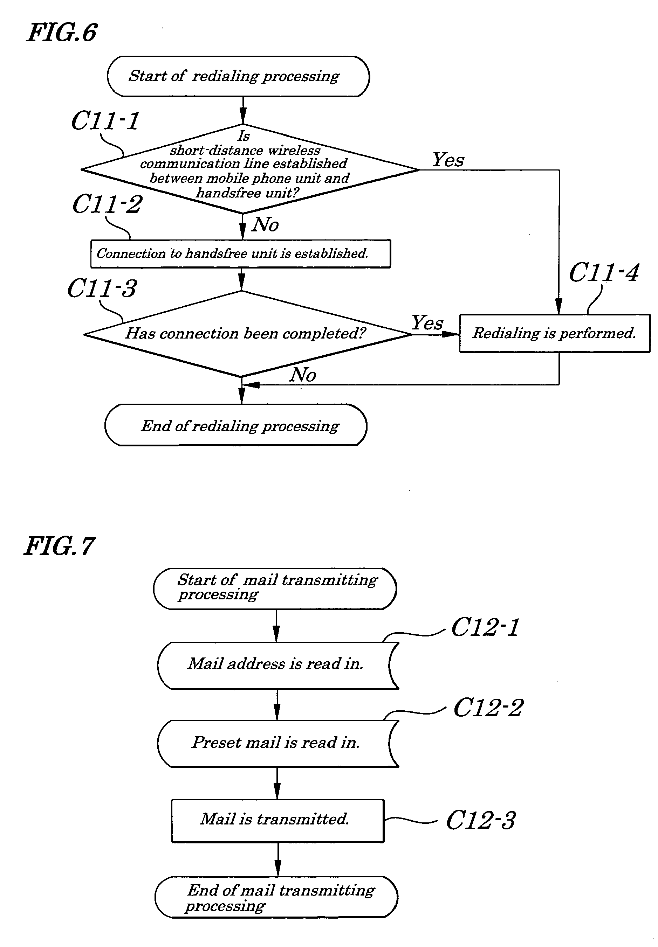

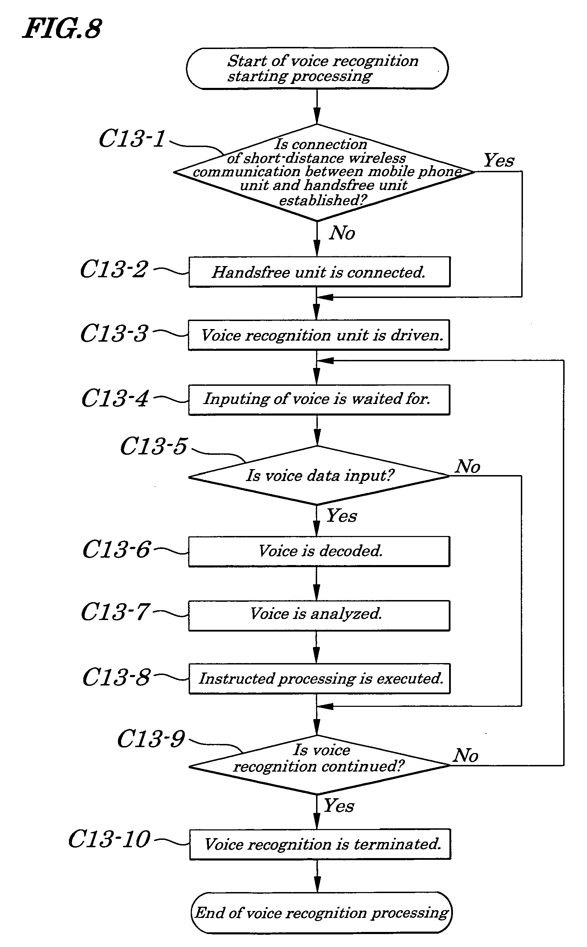

Figure 1 is a block diagram showing electrical configurations of a handsfree phone device 300 according to a first embodiment of the present invention. Figure 2 is a flowchart showing procedures for recovery processing to be adopted in the handsfree phone device 300 of the same embodiment. Figure 3 is a flowchart showing orders of operations to be performed by a handsfree unit 100 making up the handsfree phone device 300 of the same embodiment. Figure 4 is a flowchart showing orders of operations to be performed by a mobile phone unit 200 making up the handsfree phone device 300 of the same embodiment. Figure 5 is a flowchart showing operations between the handsfree unit 100 and the mobile phone unit 200 making up the handsfree phone device 300 to be performed when a phone speech is in a normal state. Figure 6 is a flowchart showing redialing operations between the handsfree unit 100 and the mobile phone unit 200 making up the handsfree phone device 300 to be performed when the phone speech is in an abnormal state. Figure 7 is a flowchart showing operations of transmitting information mail between the handsfree unit 100 and mobile phone unit 200 making up the handsfree phone device 300 when the phone speech is in an abnormal state. Figure 8 is a flowchart showing operations of performing processing by a voice instruction between the handsfree unit 100 and the mobile phone unit 200 making up the handsfree phone device 300 when the phone speech is in an abnormal state.

A recovery system 10 according to the first embodiment to recover from occurrence of an abnormal state during a handsfree phone speech is a system which is capable of performing restoration and/or emergency processing when abnormal communications occur during the handsfree phone speech. The recovery system 10 is incorporated in a handsfree phone device 300 made up of a handsfree unit 100 and a mobile phone unit 200, and in a telephone network 400 to which the mobile phone unit 200 are connected. A short-distance wireless communication technology such as the Bluetooth linking technology, wireless LAN (Local Area Network), or a like is used to connect the handsfree unit 100 to the mobile phone unit 200.

The handsfree unit 100 has a microphone 102, a speaker 104, an encoder 106, a decoder 108, a computer 110 including a CPU (Central Processing Unit)(not shown), and a short-distance wireless communication device 120. The microphone 102 is used to convert a voice emitted by a user 10U into an electrical signal (hereinafter called an analog voice signal). The speaker 104 is used to convert an input analog voice signal to a voice. The encoder 106 is used to encode an analog voice signal fed from the microphone 102 as a digital voice signal (voice data). The voice data is transmitted through the short-distance wireless communication device 120 to the mobile phone unit 200. The decoder 108 is used to decode input voice data into an analog voice signal. The voice data transmitted from the mobile phone unit 200 is received by the short-distance wireless communication device 120.

The computer 110 has a handsfree unit controller 112 to control the handsfree unit 100 and a short-distance wireless communication controller 114 to control the short-distance wireless communication device 120. The handsfree unit controller 112 and short-distance wireless communication controller 114 are operated according to control of programs. The handsfree unit controller 112 instructs the short-distance wireless communication controller 114 when the handsfree unit 100 is connected to the mobile phone unit 200 by a short-distance wireless communication line (not shown). The short-distance wireless communication device 120 transmits or receives signals, under control of the short-distance wireless communication controller 114, for communications for connection between the handsfree unit 100 and mobile phone unit 200, and for phone speech via the short-distance wireless communication line (not shown) formed between the handsfree unit 100 and the mobile phone unit 200.

The mobile phone unit 200, as shown in Fig. 1, includes a short-distance wireless communication device 202, a telephone network wireless communication unit 204, an encoder 206, a decoder 208, a computer 210, a user interface unit 220, and a microphone 230.

The short-distance wireless communication device 202 transmits or receives signals, under control of a short-distance wireless communication controller 211 described later, for communications for connection between the mobile phone unit 200 and handsfree unit 100 and for the handsfree phone speech by a short-distance wireless communication channel (not shown) formed between the mobile phone unit 200 and handsfree unit 100.

The telephone network wireless communication unit 204 transmits or receives signals, under control of a telephone network wireless communication controller 212 described later, for communications for connection between the mobile phone unit 200 and the telephone network 400 and for the phone speech via a wireless communication line formed (not shown) between the mobile phone unit 200 and the telephone network 400. The encoder 206 encodes an analog voice signal to be fed to a speaker (not shown) in the mobile phone unit 200 as voice data. The encoder 206 is used to encode a recoded voice signal obtained by once decoding voice data received from the telephone network 400, and the encoded voice signal is transmitted to the handsfree unit 100. The decoder 208 is used to decode voice data to be fed from the handsfree unit 100 into an analog voice signal. The analog voice signal is equivalent to a signal output from the microphone 230. Moreover, in the communication with the telephone network 400, encoding and decoding of signals are also required, however, are not directly related to the present invention and their descriptions are omitted accordingly.

The computer 210 includes the short-distance wireless communication controller 211, the telephone network wireless communication controller 212, a voice recognition unit 213, a mail transmitting unit 214, a call controller 215, a mobile phone unit controller 216, and a storage device 217. The short-distance wireless communication controller 211, telephone network wireless communication controller 212, voice recognition unit 213, mail transmitting unit 214, call controller 215, and mobile phone unit controller 216 are operated according to control of programs. The short-distance wireless communication controller 211 exercises control on short-distance wireless communications between the handsfree unit 100 and mobile phone unit 200 by instructions provided by the mobile phone unit controller 216. The telephone network wireless communication controller 212 exercises control on wireless communications between the mobile phone unit 200 and the telephone network 400 under control of the call controller 215.

The voice recognition unit 213 performs voice recognition processing on voice data to analyze contents of instructions provided by the user 10U. The mail transmitting unit 214 transmits mail fed from the mobile phone unit controller 216. The call controller 215 controls connection between the mobile phone unit 200 and the telephone network 400 according to instructions provided by the mobile phone unit controller 216. The mobile phone unit controller 216 controls the mobile phone unit 200 and, in ordinary cases, is provided by the handsfree unit 100 with instructions for processing of signal emission (call origination) at time of the handsfree phone speech and permission to receive a call arrival from the telephone network 400 over the short-distance wireless communication.

The storage device 217 stores a telephone directory, procedures for recovery processing corresponding to each of telephone numbers, and contents of environments to be set. The procedures for the recovery processing includes a procedure for processing of "automatic redialing", "automatic mail transmitting", "automatic switching to voice recognition operation mode", and "no automatic selection of recovery". These are examples of the recovery processing procedures. The automatic redialing is the recovery processing of automatically making a retry of calling to a party on the other end of a phone. That is, if the party on the other end of the phone is an important party such as a party of a business talk, a transaction or a like, when discontinuation of the phone speech occurs at time of operations of the handsfree phone device 300 due to some reason, it is desirous that the user of the mobile phone unit 200 makes a retry of calling even if the user is at work or is driving an automobile. If the state in which the speech line is being disconnected is left unattended, a disadvantage occurs that the party on the other end of the phone is given, for example, an unfavorable impression and/or frustration.

The automatic transmitting of mail is the recovery processing of automatically transmitting pre-set information mail to the party on the other end of the phone. That is, for example, when the party on the other end of the phone is a family memeber, friend, or a like, since no urgent procedure is required, the user of the mobile phone unit 200 informs, by mail, as an immediate measure, the party on the other end of the phone of a fact that a failure occurs in the handsfree phone device 300, which is making a speech impossible. After the transmission of the mail, the user, if driving the automobile, may make a retry of calling when stopping the driving or may expect that the party on the other end of the phone makes a retry of calling to the user.

The automatic switching to the voice recognition operation mode is the recovery processing of providing an instruction for required processing by a voice of the user 10U. That is, for example, when the speech line is disconnected suddenly, the operation mode is automatically switched to the voice recognition operation mode and a voice instruction for restoration and/or emergency processing to be performed at time of occurrence of an abnormal state during the phone speech is provided depending on a state where the phone conversation line is disconnected while the user is driving the automobile or a like.

The user interface unit 220 serves as an interface between the user 10U and the mobile phone unit 200. When setting is done for the recovery processing, a telephone number of the party on the other end of the phone is input. The microphone 230 is used to capture an analog voice signal emitted by the user 10U.

Operations for the recovery method employed in the first embodiment are described by referring to Fig. 1 to Fig. 8.

First, setting for the recovery processing is explained by referring to Fig. 2. Figure 2 shows setting procedures for the recovery processing. The processing in the setting procedures is performed mainly in the mobile phone unit controller 216 and the storage device 217. The operations of the user interface unit 220 are associated with the above setting procedures.

When the setting for recovery processing is started ("Start of setting for recovery processing" in Fig. 2), the user 10U selects, via the user interface unit 220 of the mobile phone unit 200, a telephone number by which the setting for the recovery processing is done (Step A1) The selection of the telephone number may be made by directly inputting a telephone number to be selected using a ten-key pad (not shown) or by displaying a table (not shown) of the telephone numbers on a screen (not shown) of the mobile phone unit 200 and by selecting any one of the displayed telephone numbers. If the user 10U selects an end of setting for the recovery processing, instead of selecting the telephone number ("YES" in Step A2), the routine is terminated ("End of setting for recovery processing" in Fig. 2).

If the user 10U selects the setting for the recovery processing method ("NO" in Step A2), telephone directory data is read in from the storage device 217 (Step A3) . Subsequent to the reading processing, whether the setting for the recovery processing is made valid or invalid is selected (Step A4) . If the processing by which the setting for the recovery processing method is made invalid is selected ("NO" in Step A5), the telephone directory data is again written to the storage device 217 (Step A12). If the processing by which the setting for the recovery processing is made valid is selected ("YES" in Step A5), any one of the recovery processing methods is selected (Step A6). As the recovery processing method, any one of the processing procedures including "automatic redialing", "automatic mail transmitting", and "automatic switching to a voice recognition operation mode" can be selected.

When the "automatic redialing" as the recovery processing method is selected ("Redialing" in Step A7), contents obtained by adding the automatic redialing processing procedures to data on the above telephone number (Step A8) and by integrating these procedures and telephone numbers as a set are again written into the storage device 217 as telephone directory data (Steps A8 and A12).

Also, when the "automatic mail transmitting" as the recovery processing method is selected ("Mail transmitting" in Step A7), contents of the mail are edited (Steps A9 and A11). As a prerequisite to selection of the recovery processing method, a mail address of the party on the other end of the phone is registered in a telephone directory in a form of a telephone number in such a manner to be retrievable.

This mail is used in the notification to the party on the other end of the phone when the abnormal state occurs during the handsfree speech and is provided in a form of formatted mail which informs the party on the other end of the phone that wireless communications are in a bad state, causing the phone conversation to be discontinued. A preferable example of the formatted mail is as follows: "Willing to redial immediately, however, while the user 10U is in a state of driving, a retry of calling is made later when the state is settled temporarily." The formatted mail of this kind is entered in advance in the storage device 217. Contents obtained by integrating the formatted mail, selected processing procedures, and mail address as a set are again written as telephone directory data in the storage device 217 (Step A12).

Furthermore, the "automatic switching to a voice recognition operation mode" as the recovery processing method is selected ("Voice recognition" in Step A7), contents obtained by integrating the selected processing procedures and the telephone numbers input previously are again written as telephone directory data in the storage device 217 (Steps A10 and A12).

Moreover, in the case where the mobile phone unit 200 cannot be operated by the voice recognition, the recovery processing method using the voice recognition cannot be selected.

As described above, after data on whether the setting procedures for the recovery processing method are valid or invalid and on telephone directory data has been written in the storage device 217, the routine returns back to Step A1 ("Start of setting for recovery processing" in Fig. 2).

When all the required setting procedures have been completed, the user 10U performs the ending procedure ("YES" in Step A2) and the routine terminates the setting processing ("End of setting procedures for recovery processing methods" in Fig. 2).

Next, operations of the handsfree unit 100 in which required recovery processing methods have been entered after the termination of the setting procedures for the recovery processing methods are described by referring to Fig. 3.

The processing shown in Fig. 3 is mainly performed by the handsfree unit controller 112 and the short-distance wireless communication controller 114 and this processing is associated with operations of the encoder 106 and the decoder 108.

When the operation of the handsfree unit 100 is started ("Operation start of handsfree unit" in Fig. 3), the handsfree unit 100 is connected to the mobile phone unit 200 (Step B1 in Fig. 3). Short-distance wireless communication technology such as Bluetooth linking technology, wireless LAN, or a like is used to connect the handsfree unit 100 to the mobile phone unit 200. The handsfree unit controller 112 of the handsfree unit 100 instructs the short-distance wireless communication controller 114 to make the handsfree unit 100 be connected to the mobile phone unit 200 via the short-distance wireless communication device 120.

For example, the method for connecting the handsfree unit 100 to the mobile phone unit 200 includes a method by which the handsfree unit 100 is automatically connected to the mobile phone unit 200 at the same time when an engine is started in an automobile, a method by which the user 10U provides an instruction by a one-touch operation of a panel switch of the automobile and, in response to the instruction, the handsfree unit 100 is automatically connected to the mobile phone unit 200, and a method by which an instruction is provided by the voice recognition unit 213 and, in response to the instruction, the handsfree unit 100 is automatically connected to the mobile phone unit 200. The purpose of this present invention is not the establishment of connection of the communication line for the handsfree speech and any one of the above methods may be used for the connection accordingly.

After completion of the connection of the communication line for the handsfree speech between the handsfree unit 100 and mobile phone unit 200, the user 10U can make a handsfree speech using the handsfree unit 100. The connection of the communication line is always checked. If disconnection between the handsfree unit 100 and the mobile phone unit 200 is detected ("NO" in Step B2), a retry of connecting the communication line is made (Step B1).

If the established connection is normal ("YES" in Step B2), the handsfree unit 100 receives a voice emitted by the user 10U via the microphone 102 (Step B3) and encodes its analog voice signal as voice data (B4) using the encoder 106 and transmits encoded voice data to the mobile phone unit 200 through the communication line formed by the above connection (Step B5). While a handsfree speech is being made, the handsfree unit 100 receives voice data from the mobile phone unit 200 via the above communication line (Step B6) and decodes the voice data into analog voice signals by using the decoder 108 (Step B7) and the user 10U is able to hear a voice from the speaker 104 (Step B8).

In the above description, the processing of inputting a voice from the microphone 102 and of outputting a voice from the speaker 104 are performed in order for the convenience of description; however, timing of the processing and inputting and outputting of the voice may be selected arbitrarily. In addition, the encoding and decoding of the voice may be performed by a dedicated unit such as a DSP (Digital Signal Processor) or by a program running on the computer 110.

Next, operations of the mobile phone unit 200 are described by referring to Fig. 4. Processing shown in Fig. 4 is mainly performed by the mobile phone unit controller 216 and the storage device 217 and this processing is associated with operations of the short-distance wireless communication device 202, telephone network wireless communication unit 204, encoder 206, decoder 208, short-distance wireless communication controller 211, telephone network wireless communication controller 212, voice recognition unit 213, mail transmitting unit 214, and call controller 215.

When operations of the mobile phone unit 200 are started ("Operation start of mobile phone" in Fig.4), the mobile phone unit 200 is connected to the handsfree unit 100 (Step C1). Short-distance wireless communication technology such as the Bluetooth linking technology, wireless LAN, or a like is used to connect the mobile phone unit 200 to the handsfree unit 100. In the embodiment, the mobile phone unit controller 216 instructs the short-distance wireless communication controller 211 to make the mobile phone unit 200 be connected to the handsfree unit 100 via the short-distance wireless communication device 202.

The mobile phone unit 200 is connected to the handsfree unit 100 according to the short-distance wireless communication technology. In this case, the method of the connection includes various ones including, for example, a method by which the mobile phone unit 200 is ordinarily made in a standby status so that the connection to the handsfree unit 100 is established any time, a method by which the mobile phone unit 200 is connected to the handsfree unit 100 by the user's one-touch operation of a handsfree speech button (not shown) in the mobile phone unit 200, a method by which the connection is established by instructions provided by the user 10U using the voice recognition unit 213, or a like. The purpose of this present invention is not the establishment of connection of the communication line for the handsfree speech and any one of the above methods may be used for the connection accordingly.

After the completion of the connection of the communication line between the mobile phone unit 200 and the handsfree unit 100, the handsfree speech is made possible. Even when the handsfree unit 100 and mobile phone unit 200 are put into a state in which the handsfree speech is made possible, the handsfree speech is not yet started. Therefore, at this time point, a voice recognition operation to be described later, or a like can be used. However, a method of using this operation is the same as that in Step C13 shown in Fig. 4 described later and their description is here omitted accordingly.

After the connection of the communication line has been established, the mobile phone unit 200 checks, all the time, whether the connection is normal or abnormal (Steps C2, C3). When the connection is not established ("NO" in Step C2), judgement is made as to whether the non-establishment has occurred due to normal disconnection or due to abnormal disconnection (Step C3). The judgement as to whether the non-establishment has occurred due to normal disconnection or due to abnormal disconnection can be made depending on whether the communication line for the handsfree speech was disconnected by normal procedures. When the communication line is disconnected normally ("YES" in Step C3), the procedure for the handsfree speech of the mobile phone unit 200 is terminated (coupler A, "End of operations of mobile phone").

When the communication line is disconnected abnormally ("NO" in Step C3), a try of re-connecting the mobile phone unit 200 to the handsfree unit 100 for the handsfree speech is made (Step C1). It is necessary that a limitation is imposed on the number of times of tries of the re-connection, time for the try, or a like, however, the purpose of the present invention is not to realize such items as above and its description is omitted accordingly.

If the check shows that the connection is normal ("YES" in Step C2), the mobile phone unit 200 waits for occurrence of a phone speech (Step C4). The phone speech occurs in two cases, in one case where the user 10U produces and transmits the speech and in another case where the user 10U permits and receives an arrival of the speech signal. When the user 10U produces and transmits the speech, in response to the transmission of the speech, the mobile phone unit controller 216 gives an instruction to the call controller 215 and the speech is made through the telephone network wireless communication unit 204 over the speech line formed between the mobile phone unit 200 and the telephone network 400. In the case where there is an arrival of the speech from the telephone network 400, when the user 10U permits and receives the arrival of the speech signal, a communication line is formed between the telephone network 400 and the mobile phone unit 200 and between the mobile phone unit 200 and the handsfree unit 100 and the speech is made via the communication line. If there is no occurrence of a speech ("NO" in Step C5), a state of the connection between the mobile phone unit 200 and handsfree unit 100 is checked (Step C2).

If there is occurrence of a speech ("YES" in Step C5), processing of the handsfree speech is performed (Step C6).

Next, the processing of the handsfree speech is described by referring to Fig. 5. Figure 5 shows processing to be performed when the mobile phone unit 200 is connected to the handsfree unit 100 and there is occurrence of the speech. This processing is mainly performed by the mobile phone unit controller 216 and the storage device 217. This processing is associated with operations of the short-distance wireless communication device 202, telephone network wireless communication unit 204, encoder 206, decoder 208, short-distance wireless communication controller 211, and telephone network wireless communication controller 212.

When the processing of the handsfree speech is started ("Start of handsfree speech processing" in Fig. 5), the mobile phone unit 200 monitors a speech state of the telephone network all the time and checks whether the speech is being continued or not (Step C6-1) . The mobile phone unit 200 checks whether or not the speech operation has terminated abnormally, that is, whether or not the communication line with the telephone network 400 has been disconnected without going through normal procedures. Moreover, a normal end of a speech occurs when the user 10U performs processing of intentionally terminating the speech or a party on the other end of a phone performs processing of intentionally terminating the speech.

If a result from the checking on the state of communication line with the telephone network 400 shows that the speech is being normally continued ("YES" in Step C6-1), the state of connection between the mobile phone unit 200 and handsfree unit 100 is checked (Step C6-2) . When the mobile phone unit 200 judges that the mobile phone unit 200 is disconnected from the handsfree unit 100 ("NO" in Step C6-2), the mobile phone unit controller 216 instructs the call controller 215 to disconnect the communication line with the telephone network 400 (Step C6-10). If only the connection to the telephone network 400 is still maintained even in a state where the mobile phone unit 200 is disconnected from the handsfree unit 100, charging of a telephone charge continues though the speech is made impossible. This is the reason why the communication line with the telephone network 400 is intentionally disconnected.

In the embodiment described above, when the communication line with the handsfree unit 100 is disconnected, the speech is made to be discontinued immediately. However, unlike the above embodiment, in many cases, a method is selected by which the short-distance wireless communication line is restored when a try of re-connection is made a predetermined number of times or within specified time.

In a state where the mobile phone unit 200 is normally connected to the handsfree unit 100 ("YES" in Step C6-2), the mobile phone unit 200 receives voice data transmitted from the party on the other end of the phone, which is received by the telephone network 400 and telephone network wireless communication unit 204 via the mobile phone unit controller 216 (Step C6-3). Moreover, in order for the mobile phone unit 200 to receive voice data from the telephone network 400, decoding of the voice data is necessary; however, the present invention is not related to a receipt of voice data from the telephone network 400 and its description is omitted accordingly. When an analog voice signal received from the telephone network 400 and then decoded is transmitted to the handsfree unit 100, the encoder 206 of the mobile phone unit 200 encodes the decoded voice signal (Step C6-4) as voice data and transmits the encoded voice signal as the voice data to the handsfree unit 100 over the short-distance wireless communication line (Step C6-5).

Also, the mobile phone unit 200 receives voice data from the handsfree unit 100 (Step C6-6) and decodes the received voice data (Step S6-7) and then transmits the voice data via the mobile phone unit controller 216 to the telephone network 400 (Step C6-8) . Moreover, in order for the mobile phone unit 200 to transmit the voice data to the telephone network 400, encoding of the voice data is necessary; however, the present invention is not related to transmission of the voice data to the telephone network 400 and its description is omitted accordingly.

In the above descriptions, to simplify the description of the invention, processing of the receiving voice data from the telephone network 400, of transmitting voice data to the handsfree unit 100, of receiving the voice data from the handsfree unit 100, and of transmitting the voice data to the telephone network 400 are described in order; however, the order of processing, processing of receiving the voice data, and timing of transmitting the voice data can be set arbitrarily.

Also, as in the case of the handsfree unit 100, as the encoder 206 and decoder 208, a dedicated device for encoding and decoding the voice data such as a DSP may be employed. Also, the decoding and encoding can be achieved by a program to run on the computer 110. The present invention is not limited to the encoding and decoding technology and any method of encoding and decoding can be applied accordingly.

When the user 10U continues the above handsfree speech with the party on the other end of the phone ("NO" in Step C6-9), transmitting and receiving of the voice data described above are repeated (Steps C6-1 to C6-9). When the user 10U selects an end of the speech or receives a notification of the end of the speech from the telephone network 400 because the party on the other end of the phone terminates the speech ("YES" in Step C9)(Fig. 4), the speech line is disconnected (Step C6-10).

As described above, after the handsfree speech processing is complete ("End of handsfree speech processing" in Fig. 5), judgement is made as to whether the handsfree speech processing is terminated normally or abnormally (Step C7) . When the hands free speech processing is terminated normally ("NO" in Step C7), the mobile phone unit 200 waits for a subsequent phone conversation (Step C4).

On the contrary, if the handsfree speech is terminated abnormally ("YES" in Step C7), the routine proceeds to the step of performing the recovery processing method of the present invention in order to recovery from the abnormal state. First, the mobile phone unit controller 216 in the mobile phone unit 200 searches for a telephone number of the party on the other end of the phone by using telephone directory data stored in the storage device 217 and captures information about the recovery processing method that has been already set therein (Step C8). In this embodiment, a telephone number of the party on the other end of the phone with whom a telephone conversation was made is stored in advance in the storage device 217 according to the storing procedures described above. If the telephone number is not stored in advance, according to other preset recovery processing method, restoration and/or emergency processing is performed.

The mobile phone unit controller 216 in the mobile phone unit 200, after obtaining the pre-set recovery processing method that can be applied to the party on the other end of the phone from the telephone directory data, judges whether the obtained recovery processing method is valid or invalid (Step C9). If the recovery processing method is invalid ("NO" in Step C9), the routine returns back to the step of checking a state of connection with the handsfree unit 100 with nothing being performed (Step C2). If the recovery processing method is valid ("YES" in Step 9), the mobile phone unit controller 216 in the mobile phone unit 200 judges the recovery processing method that has been set in a manner to be associated with the obtained telephone number and stored therein (Step C10).

When the set recovery processing method is "automatic redialing" ("Redialing" in Step C10), redialing processing is performed (Step C11).

Next, the redialing processing is described by referring to Fig. 6. Figure 6 shows the processing of automatically redialing the party on the other end of the phone as a recovery processing method from an abnormal end of the speech in a state in which the mobile phone unit 200 is connected to the handsfree unit 100. This processing is mainly performed by the mobile phone unit controller 216 and the storage device 217 and is associated with operations of the telephone network wireless communication unit 204, telephone network wireless communication controller 212, and call controller 215.

When the redialing processing is started ("Start of redialing processing" in Fig. 6), the mobile phone unit 200 checks a state of the connection of the short-distance wireless communication line (not shown) between the mobile phone unit 200 and the handsfree unit 100 and, if the connection of the short-distance wireless communication line is established ("YES" in Step C11-1), the telephone network wireless communication controller 212 instructs the call controller 215 to establish the connection with a telephone unit corresponding to the telephone number of the party on the other end of the phone with whom the speech was terminated abnormally and redials immediately (Step C11-4). If the connection of the short-distance wireless communication line between the mobile phone unit 200 and handsfree unit 100 is not established ("NO" in Step C11-1), the mobile phone unit 200 establishes the connection between the mobile phone unit 200 and handsfree unit 100 (Step C11-2) and when the connection of the short-distance wireless communication line is established by the above connecting processing and the communication is made possible ("YES" in Step C11-3), redialing is again performed (Step C11-4). On the contrary, if the connection of the short-distance wireless communication line is not established ("NO" in Step C11-3), no redialing is performed ("End of redialing processing" in Fig. 6).

As described above, after the redialing processing is completed, judgement is made on results of the redialing processing (Step C14 in Fig. 4). If the connection of the short-distance wireless communication line is established and the redialing is performed which makes the phone speech possible ("Connection being established. Speech being made possible" in Step C14), the routine returns back to the processing of a handsfree speech (Step C6). If the connection of the short-distance wireless communication line is established and the redialing is not performed ("Connection being established. Speech being made impossible" in Step C14), the routine returns back to the state in which the mobile phone unit 200 waits for occurrence of a phone speech. If the connection of the short-distance wireless communication line is not established ("Connection being not established" in Step C14), the handsfree speech is terminated ("End of operation of mobile phone" in Fig. 4).

When the set recovery processing method is "automatic mail transmitting" ("Mail transmitting" in Step C10), mail transmitting processing is performed (Step C12). The mail transmitting processing is described by referring to Fig. 7. Figure 7 shows the processing of transmitting mail to the party on the other end of the phone from the mobile phone unit 200 through the telephone network 400. This processing is mainly performed by the mobile phone unit controller 216 and storage device 217 and is associated with operations of the telephone network wireless communication unit 204, telephone network wireless communication controller 212, and mail transmitting unit 214.

When the mail transmitting processing is started ("Start of mail transmitting processing" in Fig. 7), a mail address corresponding to a telephone number of the party on the other end of the phone is read in from the storage device 217 (Step C12-1) and contents of the mail are read in from the storage device 217 (Step C12-2) . Based on the read information, mail is created and the mobile phone unit controller 216 instructs the mail transmitting unit 214 to transmit mail (Step C12-3). After the mail transmitting unit 216 have switched the communication mode from a speech communication mode to a packet communication mode and have transferred control to the telephone network wireless communication controller 212, the mail is transmitted through the telephone network wireless communication unit 204.

Moreover, if the abnormal termination described above is caused not by abnormality in the short-distance wireless communication line but by abnormality in the telephone network 400, there is a risk of a failure in transmitting the above mail. In this case, it is necessary to take processing of repeating the retry of transmitting the mail; however, this is not directly related to the present invention, its description is omitted accordingly.

As described above, after completion of the mail transmitting processing (Step C12) ("End of mail transmitting processing" in Fig. 7), the routine returns back to the step of processing of checking the state of connection between the mobile phone unit 200 and handsfree unit 100 (Step C2 in Fig. 4). This is performed to restore the short-distance wireless communication line so as to be ready for a subsequent speech.

When the preset recovery processing method to be performed at time of abnormal termination is "automatic switching to a voice recognition operation mode" ("Voice recognition" in Step C10 in Fig. 4), the voice recognition starting processing is performed ("Start of voice recognition starting processing" in Step C13 in Fig. 4 and in Fig. 8). Figure 8 shows processing to be performed against abnormal termination in the handsfree speech by starting the voice recognition function of the mobile phone unit 200. This processing is mainly performed by the mobile phone unit controller 216 and storage device 217, in association with which operations of the telephone network wireless communication unit 204, encoder 206, decoder 208, telephone network wireless communication controller 212, voice recognition unit 213, mail transmitting unit 214, and call controller 215 are performed.

When the processing procedure of the voice recognition operation mode selected in advance, as the recovery processing method from the abnormal termination, is started, the mobile phone unit controller 216 first checks a state of the connection of the short-distance wireless communication line between the mobile phone unit 200 and handsfree unit 100 (Step C13-1) and, if the connection of the short-distance wireless communication line is established ("YES" in Step C13-1), the mobile phone unit controller 216 drives the voice recognition unit 213 (Step C13-3) . If the connection of the short-distance wireless communication line is not established ("NO" in Step C13-1), the mobile phone unit controller 216 tries to be connected to the handsfree unit 100 (Step C13-2). Regardless of a success or failure in the try of the connection to the short-distance wireless communication line, the mobile phone unit controller 216 drives the voice recognition unit 213 (Step C13-3).

If a speech over the short-distance wireless communication line is made possible, voice data to be received from the handsfree unit 100 is analyzed by the voice recognition unit 213. However, if a speech over the short-distance wireless communication line is impossible, the microphone 230 attached to the mobile phone unit 200 gathers voice emitted from a user 10U and the voice data is analyzed by the voice recognition unit 213.

However, when a telephone speech over a short-distance wireless communication line formed between a mobile phone unit 200 and the handsfree unit 100 is made, in many cases, the mobile phone unit 200 is left as it is into a bag or pocket and, therefore, voice quality of a voice signal gathered by the microphone 230 of the mobile phone unit 200 is poor, causing interference with recognition and analysis of the voice signal. As a result, in ordinary cases, voice data fed from the handsfree unit 100 is used. In the example of the embodiment, description of the voice data to be obtained from the microphone is not provided.

When the voice recognition function described above is started, the voice data to be transmitted from the handsfree unit 100 over the short-distance wireless communication line is waited for (Step C13-4) and, if the voice data is not input ("NO" in Step C13-5), judgement as to whether the voice recognition processing is terminated or not is made (Step C13-9) . When voice data is input ("YES" in Step C13-5), the voice data is decoded using the decoder 208 (Step C13-6) and the voice data is analyzed by the voice recognition unit 213 and an instruction from the user 10U is judged by the voice recognition unit 213 (Step C13-7).

Then, the mobile phone unit controller 216 operates the mobile phone unit 200 according to the above instruction (Step C13-8) . Contents of above instructions include transmission of, for example, a telephone to a party on the other hand of the phone while being in a mobile phone speech, voice, image mail, or a like.

When operations by the voice recognition described above are executed, judgement as to whether or not the voice recognition is terminated is made (Step C13-9). There are two cases in which the voice recognition is terminated, one being a case in which the voice recognition is automatically terminated if an instruction does not occur by voice within specified time or another being case in which a user 10U intentionally terminates the voice recognition according to a voice command or other instruction, or a like.

If the voice recognition is continued as a result of the judgement ("NO" in Step C13-9), the routine returns back to a state of waiting for voice input (Step C13-4) . If the operation by voice recognition is terminated ("YES" in Step C13-9), the voice recognition unit 213 is terminated (Step C13-10) and the voice recognition driving processing is terminated ("End of voice recognition driving processing")

Thus, when the voice recognition driving processing is terminated, the routine returns back to processing of checking a state of connection with the handsfree unit 100 (Step C2 in Fig. 4) . This is to restore a speech line if the speech over the short distance wireless communication line continues to be disconnected.

Thus, according to the configurations of the first embodiment, as an insurance against abnormal termination of the handsfree speech caused by an abnormality in the short distance wireless communication line between the handsfree unit 100 and mobile phone unit 200, recovery processing procedures to be taken at time of the abnormal termination are stored in advance and restoration and/or emergency processing are automatically performed on a speech having ended abnormally in the recovery processing procedures at time of abnormal termination and, therefore, specified and easy procedure can be done by oral instructions from the user, without complicated operations to be performed by the user who was at the handsfree speech, thus serving to improvements of safety and workability in a handsfree speech environment.

The above recovery processing procedure is stored in advance in a manner to correspond to the party on the other end of the phone at time of abnormal termination of the phone speech and restoration and emergency procedures can be automatically performed on a speech having ended abnormally by recovery processing procedures corresponding to the party on the other end of the phone at time of abnormal termination and, therefore, a unit that can perform flexible processing in a manner to correspond to the party on the other end of the phone can be constructed, not in a fixed manner, in the handsfree phone device 300.

### Second Embodiment

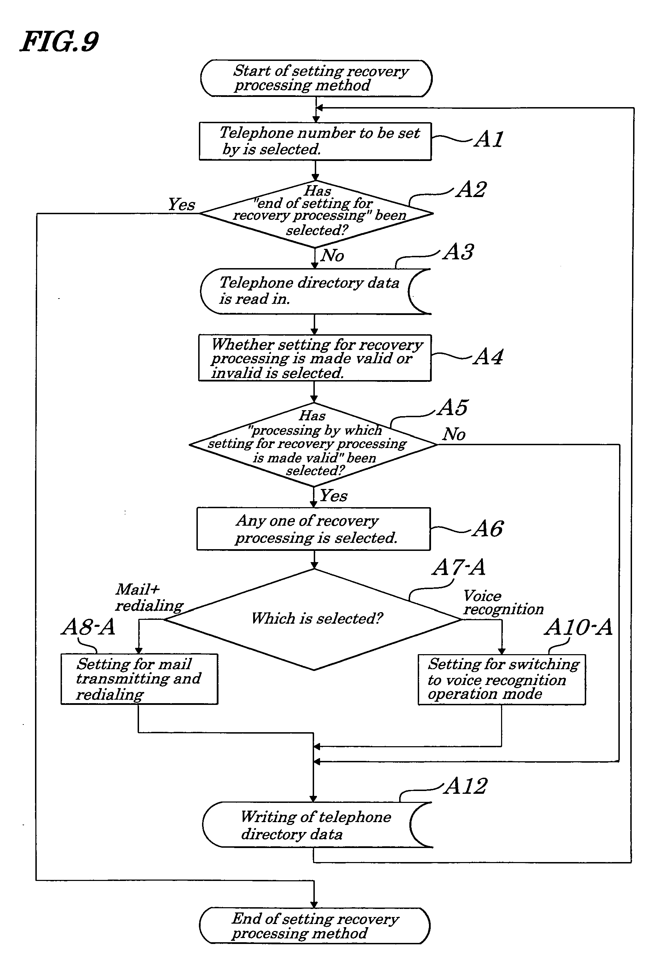

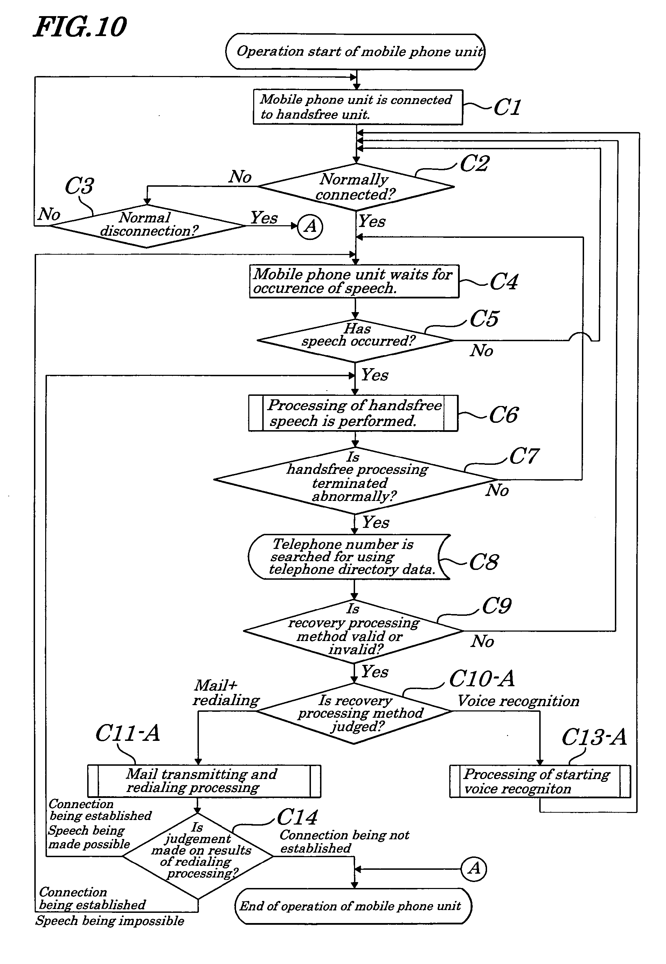

Figure 9 is a flowchart showing setting procedures of a recovery processing method to be used by a handsfree phone device according to a second embodiment of the present invention. Figure 10 is a flowchart showing operating orders of a mobile phone in the handsfree phone device according to the second embodiment. Configurations of the second embodiment differ from those in the first embodiment in that a plurality of recovery processing methods are used for processing of solving a problem of a handsfree speech.

That is, as a method of recovery from an abnormality in the handsfree speech stored in a mobile phone unit 200 (Fig. 1), mail transmitting described in the first embodiment and automatic redialing are combined to perform restoration and/or emergency processing on the abnormality occurred in the handsfree speech, according to the method of recovery. The storing of the recovery method and recovery processing are controlled by same programs as used in the first embodiment, as shown in Figs. 9 and 10.

Figure 9 shows a recovery processing method for the handsfree speech to be made in the mobile phone unit 200. Steps A1 to A6, and A12 shown in Fig. 9 are the same as explained by referring to Fig. 2 in the first embodiment. Judgement is made, in Step A7-A, as to whether "processing of automatically redialing after mail transmitting" or "processing by voice instructions" is selected. The selected recovery processing method is set in Step A8-A and the selected recovery processing method is set in Step A10-A. Figure 10 shows orders of operating of the mobile phone unit 200 and Steps C1 to C9 and C14 are the same as those described by referring to Fig. 4. Judgement is made, in Step C10-A in Fig. 10, as to whether "processing of automatically redialing after mail transmitting" or "processing by voice instructions" is selected. In Step C11-A, when the "processing of automatically redialing after mail transmitting" is selected as a recovery processing method, processing of mail transmitting and automatic redialing is performed and, in Step of C13-A, when the "processing by voice instruction" is selected as the recovery processing method, processing is performed according to contents of voice instructions. Configurations other than described above in the second embodiment are the same as in the first embodiment and same reference numbers are assigned to components in the first embodiment and their detailed descriptions are omitted.

Next, operations in the second embodiment are explained by referring to Figs. 9 and 10. In Fig. 9, processing in Steps A1 to A6 is the same as those in the first embodiment. In Step A7-A, when "processing of automatically redialing after mail transmitting" is selected as a recovery processing method ("mailing + redialing" in Step A7-A in Fig. 9), processing of mail transmitting and automatic redialing is set (Step A8-A) and the setting is stored in a storage device 217 (Step A12).

Similarly, in Step A7-A, when the "processing by voice instruction" is selected as the recovery processing method ("voice recognition" in Step A7-A in Fig. 9), its recovery processing method is set (Step A10-A) and the setting is stored in the storage device 217 (Step A12). Even if the processing of using the voice recognition function is selected, contents of the instruction may be, for example, the "processing of automatically redialing after mail transmitting" described later.

Now, let it be assumed that, after the recovery processing method has been stored in the storage device 217, a handsfree speech is started between a user 10U and a party on an other end of a phone via the mobile phone unit 200 (Steps C1, C2, C4 to C6) and, while the handsfree speech is in progress, the speech is terminated abnormally ("YES" in Step C7).

Telephone directory data stored in the storage device 217 is searched for (Step C8) and judgement is made as to whether the recovery processing method is valid or invalid (Step C9) and judgement is made to select the recovery processing method for the telephone number having been searched for (Step C10-A). When the method of "processing of automatically redialing after mail transmitting" is selected (mail + redialing in Step C10-A), mail of, for example, "Make retry of calling" is transmitted. If the party on the other end of the phone does not make a retry of calling when specified time has elapsed after the transmission of the mail, redialing to the party on the other end of the phone is automatically performed. The mail transmission and redialing are performed according to the method described in the first embodiment shown in Figs. 6 and 7.

Thus, according to the second embodiment, the same effects as obtained in the first embodiment can be achieved and cumulative restoration and/or emergency processing are performed.

### Third Embodiment

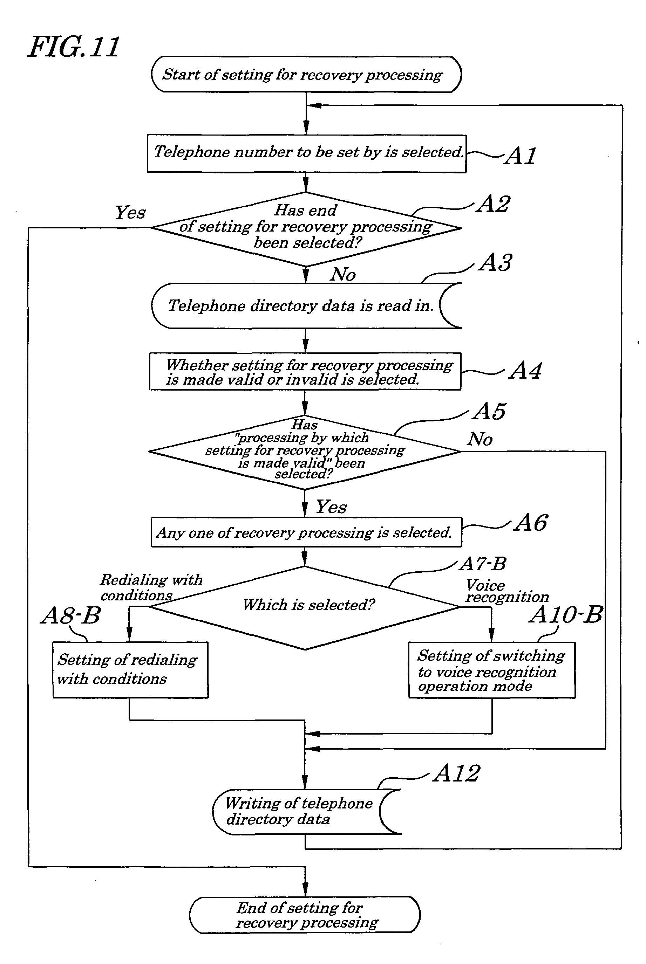

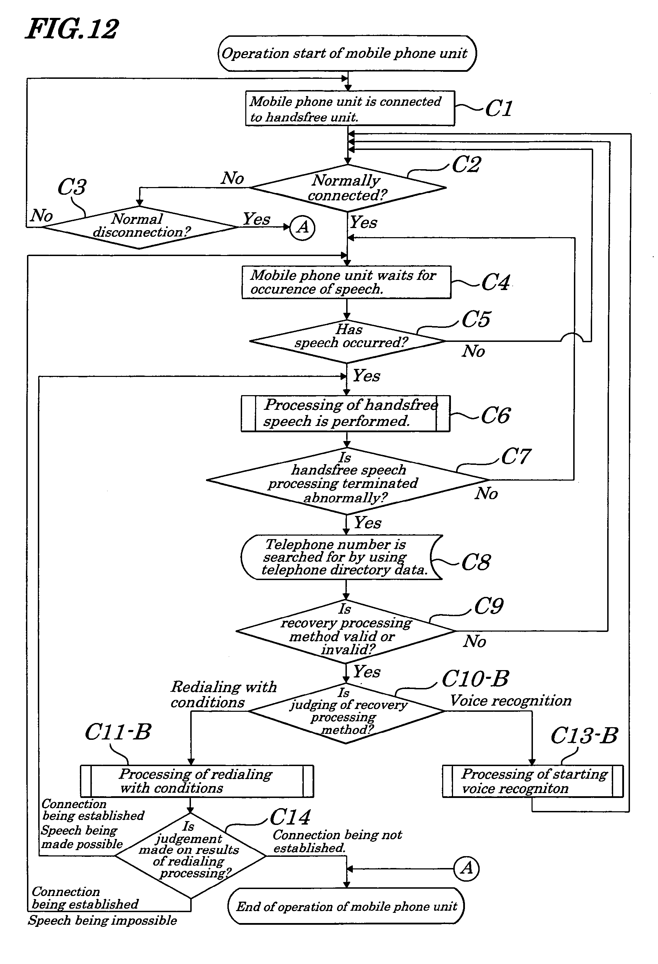

Figure 11 is a flowchart showing setting procedures for a recovery processing method to be employed in a handsfree phone device of a third embodiment of the present invention. Figure 12 is a flowchart of operating orders of a mobile phone in a handsfree phone device of a third embodiment of the present invention. Configurations of the third embodiment differ from those in the first embodiment in that conditions are added in advance to execute the speech recovery processing method.

That is, conditions are added when the speech recovery processing method, which is stored in advance in the mobile phone unit 200 (Fig. 1), for when handsfree speech is executed and, when an abnormality occurs in the handsfree speech, if conditions having been added in advance are satisfied, restoration and/or emergency processing against the abnormality in the handsfree speech occurred in the recovery processing method is performed according to the above recovery processing method. As shown in Fig. 11 and Fig. 12, the storing and recovery processing for the handsfree speech is controlled by a program as in the case of the first embodiment.

Figure 11 shows setting procedures of the recovery processing method for the handsfree speech in the mobile phone unit 200. The processes in Steps A1 to A6 and A12 shown in Fig. 11 are the same as described in the first embodiment in Fig. 2. In Step A7-B in Fig. 11, selection of "automatically redialing when specified conditions are satisfied" or "processing by voice instructions" is made. In Step A8-B, "automatically redialing with specified conditions" is selected and set as a recovery processing method. On the other hand, in Step A10B, "switching to voice recognition operation mode" is selected and "processing by voice instructions is set as another recovery processing method.

Figure 12 shows operating orders in the mobile phone unit 200 and processes in Step C1 to C9, and C14 are the same as described in the first embodiment in Fig. 4. In Step C10-B in Fig. 12, judgement is made as to which is selected, "automatically redialing when specified conditions are satisfied" or "processing by voice instructions" as the recovery processing method. In Step C11-B in Fig. 12, when "automatically redialing when specified conditions are satisfied" is selected as the recovery processing method, if the specified conditions are satisfied, redialing is performed automatically. In Step C13-B, when "processing by voice instructions" is selected as the recovery processing method, processing is performed according to contents of voice instruction. Configurations other than described above in the third embodiment are the same as in the first embodiment and same reference numbers are assigned to components in the first embodiment and their detailed descriptions are omitted.

Operations to be performed in the third embodiment are described by referring to Figs. 11 and 12. In Fig. 11, processing in Steps A1 to A6 is the same as in the first embodiment. In Step A7-B, when "automatically redialing when specified conditions are satisfied" is selected as the recovery processing method ("Redialing with conditions" in Step A7-B in Fig. 11), the recovery processing method is set (Step A8-B) and the setting is stored in the storage device 217 (Step A12).

Similarly, in Step A7-B, when "processing by voice instructions" is selected as the recovery processing method (Processing by voice instructions), the recovery processing method is set (Step A10-B) and the setting is stored in the storage device 217 (Step A12) . Even if the processing of using the voice recognition function is selected, contents of the instruction may be, for example, the "automatically redialing when specified conditions are satisfied".

Now, let it be assumed that, after the recovery processing method has been stored in the storage device 217, a handsfree speech is started between a user 10U and a party on an other end of a phone via the mobile phone unit 200 (Steps C1, C2, C4 to C6 in Fig. 12) and, while the handsfree speech is in progress, the speech is terminated abnormally ("YES" in Step C7).

Telephone directory data stored in the storage device 217 is searched for (Step C8) and judgement is made as to whether the recovery processing method is valid or invalid (Step C9) and then contents of the recovery processing method for the telephone number having been searched for are judged (Step C10-B). If the judgement shows that the recovery processing method is "automatically redialing when specified conditions are satisfied" ("Redialing with conditions" in Step C10-B) and the specified conditions are satisfied, automatically redialing is performed. The above specified conditions include, for example, whether or not the phone speech was started by call originating of the user 10U or by a call arrival from the party on the other end of the phone, whether or not a cumulative phone speech charge of a month is within a phone speech charge of the month, whether or not a residual amount of a cell is within a specified amount, or a like. Moreover, the redialing is performed according to the method by referring to Fig. 6 in the first embodiment.

Thus, according to the third embodiment, the same effects as obtained in the first embodiment can be achieved and more detailed restoration and/or emergency processing can be performed.

It is apparent that the present invention is not limited to the above embodiments but may be changed and modified without departing from the scope of the invention. For example, in the above embodiments, the example is shown in which setting is done so that the processing against abnormal termination of the handsfree speech is made invalid, however, even if this setting is done, when an abnormality occurs, other recovery processing methods against the abnormality installed in the mobile phone unit 200 can be selected. This can be also applied in a case in which the speech with the party on the other end of the phone who is not stored is terminated abnormally. Moreover, instead of transmission of mail, a fax message can be used.

Also, in the second embodiment, the combination of the recovery processing method is described, however, in that case, a short formatted sentence may be edited, or a text may be converted by voice recognition, or a voice may be transmitted by mail as an attached file.

Furthermore, the method of recovery from occurrence of the abnormal state during the handsfree phone speech, its recovery system, the handsfree phone device described above can be used in an environment in which the phone speech is to be made without holding the handsfree unit while the user is driving a vehicle requiring specified operations other than automobiles.

## Claims

1. A method of recovery from occurrence of an abnormal disconnection in a communication line between a handsfree unit (100) and a mobile phone unit (200) during a handsfree phone speech, the method comprising:
detecting the abnormal disconnection occurring while the handsfree phone speech is being made between said handsfree unit (100) and a telephone set of a communication partner by connecting said handsfree unit (100) to said mobile phone unit (200) by radio and by connecting said mobile phone unit (200) to the telephone set of the communication partner over a communication network (400), **characterized by**
transmitting mail of a request to make a retry of calling automatically from the mobile phone unit to the telephone set of the communication partner or a communication terminal related to said telephone set when the abnormal disconnection is detected; and
redialing to the telephone set of the communication partner automatically, if the communication partner does not make the retry of calling when specified time has elapsed after the transmission of the mail.

2. A recovery system from occurrence of an abnormal disconnection in a communication line between a handsfree unit (100) and a mobile phone unit (200) during a handsfree phone speech for performing recovery processing from the abnormal disconnection occurring while the handsfree phone speech is being made between said handsfree unit (100) and a telephone set of a communication partner by forming said first communication line between said handsfree unit (100) and said mobile phone unit (200) and by forming a second communication line between said mobile phone unit (200) and the telephone set of the communication partner over a communication network (400),
wherein said mobile phone unit (200) comprises:
a detecting unit (216) to detect the abnormal disconnection over said first communication line occurring during the handsfree phone speech, **characterized in that** the system further comprises
a storing unit (217) to store information to be transmitted to the telephone set of the communication partner or a communication terminal related to said telephone set; and
a recovery processing unit (204, 212, 213, 214, 216) to transmit mail of a request to make a retry of calling automatically based on said information stored in said storing unit (217) when the abnormal disconnection is detected by said detecting unit (216), and to redial to the telephone set of the communication partner automatically, if the communication partner does not make the retry of calling when specified time has elapsed after the transmission of the mail.

3. A handsfree telephone device comprising:
a handsfree unit (100); and
a mobile phone unit (200) connected to said handsfree unit (100) over a first communication line and connected to a telephone set of a communication partner over a second communication line, which comprises:
a detecting unit (216) to detect an abnormal disconnection in said first communication line occurring while a speech is being made between said handsfree unit (100) and the telephone set of the communication partner, **characterized in that** the device further comprises
a storing unit (217) to store information to be transmitted to the telephone set of the communication partner or a communication terminal related to said telephone set; and
a recovery processing unit (204, 212, 213, 214, 216) to transmit mail of a request to make a retry of calling automatically based on said information when the abnormal disconnection in said second communication line is detected, and to redial to the telephone set of the communication partner automatically, if the communication partner does not make the retry of calling when specified time has elapsed after the transmission of the mail,
wherein the speech is made between said handsfree unit (100) and the telephone set of the communication partner over said first communication line and said second communication line.

4. A control program to make a computer execute a recovery method at time of occurrence of an abnormal disconnection in a communication line between a handsfree unit (100) and a mobile phone unit (200) during a handsfree phone speech, the method comprising:
detecting the abnormal disconnection occurring while the handsfree phone speech is being made between said handsfree unit (100) and a telephone set of a communication partner by connecting said handsfree unit (100) to said mobile phone unit (200) by radio and by connecting said mobile phone unit (200) to the telephone set of the communication partner over a communication network (400), **characterized by**
transmitting mail of a request to make a retry of calling automatically from the mobile phone unit to the telephone set of the communication partner or a communication terminal related to said telephone set when the abnormal disconnection is detected; and
redialing to the telephone set of the communication partner automatically, if the communication partner does not make the retry of calling when specified time has elapsed after the transmission of the mail.

## Patentansprüche

1. Verfahren zur Wiederherstellung vom Auftreten einer anormalen Unterbrechung in einer Kommunikationsleitung zwischen einer Freisprecheinheit (100) und einer Mobiltelefoneinheit (200) während eines Freisprechtelefongesprächs, wobei das Verfahren aufweist:
Detektieren der anormalen Unterbrechung, die auftritt, während das Freisprechtelefongespräch zwischen der Freisprecheinheit (100) und einem Telefonapparat eines Kommunikationspartners durchgeführt wird, durch Verbinden der Freisprecheinheit (100) mit der Mobiltelefoneinheit (200) durch Funk und durch Verbinden der Mobiltelefoneinheit (200) mit dem Telefonapparat des Kommunikationspartners über ein Kommunikationsnetzwerk (400), **gekennzeichnet durch**
Senden einer Mail einer Anforderung, einen erneuten Versuch eines automatischen Anrufs zu unternehmen, von der Mobiltelefoneinheit an den Telefonapparat des Kommunikationspartners oder ein Kommunikationsendgerät, das mit dem Telefonapparat zusammenhängt, wenn die anormale Unterbrechung detektiert wird; und
automatisches Wiederanwählen des Telefonapparats des Kommunikationspartners, wenn der Kommunikationspartner keinen erneuten Versuch eines Anrufs unternimmt, wenn eine festgelegte Zeit nach dem Senden der Mail verstrichen ist.

2. Wiederherstellungssystem aus dem Auftreten einer anormalen Unterbrechung in einer Kommunikationsleitung zwischen einer Freisprecheinheit (100) und einer Mobiltele-foneinheit (200) während eines Freisprechtelefongesprächs zum Durchführen einer Wiederherstellungsverarbeitung aus der anormalen Unterbrechung, die auftritt, während das Freisprechtelefongespräch zwischen der Freisprecheinheit (100) und einem Telefonapparat eines Kommunikationspartners durchgeführt wird, durch Aufbauen der ersten Kommunikationsleitung zwischen der Freisprecheinheit (100) und dem Mobiltelefoneinheit (200) und durch Aufbauen einer zweiten Kommunikationsleitung zwischen der Mobiltelefoneinheit (200) und dem Telefonapparat des Kommunikationspartners über ein Kommunikationsnetzwerk (400),
wobei die Mobiltelefoneinheit (200) aufweist:
eine Detektionseinheit (216), um die anormale Unterbrechung über die erste Kommunikationsleitung zu detektieren, die während des Freisprechtelefongesprächs auftritt, **dadurch gekennzeichnet, dass** das System ferner aufweist:
eine Speichereinheit (217), um Informationen zu speichern, die an den Telefonapparat des Kommunikationspartners oder ein Kommunikationsendgerät gesendet werden sollen, das mit dem Telefonapparat zusammenhängt; und
eine Wiederherstellungsverarbeitungseinheit (204, 212, 213, 214, 216), um eine Mail einer Anforderung, einen erneuten Versuch eines automatischen Anrufs zu unternehmen, beruhend auf den in der Speichereinheit (217) gespeicherten Informationen zu senden, wenn die anormale Unterbrechung durch die Detektionseinheit (216) detektiert wird, und automatisch den Telefonapparat des Kommunikationspartners wieder anzuwählen, wenn der Kommunikationspartner keinen erneuten Versuch eines Anrufs unternimmt, wenn eine festgelegte Zeit nach dem Senden der Mail verstrichen ist.

3. Freisprechtelefonvorrichtung mit:
einer Freisprecheinheit (100); und
einer Mobiltelefoneinheit (200), die mit der Freisprecheinheit (100) über eine erste Kommunikationsleitung verbunden ist und die mit einem Telefonapparat eines Kommunikationspartners über eine zweite Kommunikationsleitung verbunden ist, die aufweist:
eine Detektionseinheit (216), um die anormale Unterbrechung in der ersten Kommunikationsleitung zu detektieren, die auftritt, während ein Gespräch zwischen der Freisprecheinheit (100) und dem Telefonapparat eines Kommunikationspartners durchgeführt wird, **dadurch gekennzeichnet, dass** die Vorrichtung ferner aufweist:
eine Speichereinheit (217), um Informationen zu speichern, die an den Telefonapparat des Kommunikationspartners oder ein Kommunikationsendgerät, gesendet werden sollen, das mit dem Telefonapparat zusammenhängt; und
eine Wiederherstellungsverarbeitungseinheit (204, 212, 213, 214, 216), um eine Mail einer Anforderung, einen erneuten Versuch eines automatischen Anrufs zu unternehmen, beruhend auf den Informationen zu senden, wenn die anormale Unterbrechung in der zweiten Kommunikationsleitung detektiert wird, und den Telefonapparat des Kommunikationspartners automatisch wieder anzuwählen, wenn der Kommunikationspartner keinen erneuten Versuch eines Anrufs unternimmt, wenn eine festgelegte Zeit nach dem Senden der Mail verstrichen ist,
wobei das Gespräch zwischen der Freisprecheinheit (100) und dem Telefonapparat des Kommunikationspartners über die erste Kommunikationsleitung und die zweite Kommunikationsleitung durchgeführt wird.

4. Steuerprogramm, um einen Computer zu veranlassen, ein Wiederherstellungsverfahren zur Zeit des Auftretens einer anormalen Unterbrechung in einer Kommunikationsleitung zwischen einer Freisprecheinheit (100) und einer Mobiltelefoneinheit (200) während eines Freisprechtelefongesprächs auszuführen, wobei das Verfahren aufweist:
Detektieren der anormalen Unterbrechung, die auftritt, während das Freisprechtelefongespräch zwischen der Freisprecheinheit (100) und einem Telefonapparat eines Kommunikationspartners durchgeführt wird, durch Verbinden der Freisprecheinheit (100) mit der Mobiltelefoneinheit (200) durch Funk und durch Verbinden der Mobiltelefoneinheit (200) mit dem Telefonapparat des Kommunikationspartners über ein Kommunikationsnetzwerk (400), **gekennzeichnet durch**
Senden einer Mail einer Anforderung, einen erneuten Versuch eines automatischen Anrufs zu unternehmen, von der Mobiltelefoneinheit an den Telefonapparat des Kommunikationspartners oder ein Kommunikationsendgerät, das mit dem Telefonapparat zusammenhängt, wenn die anormale Unterbrechung detektiert wird; und
automatisches Wiederanwählen des Telefonapparats des Kommunikationspartners, wenn der Kommunikationspartner keinen erneuten Versuch eines Anrufs unternimmt, wenn eine festgelegte Zeit nach dem Senden der Mail verstrichen ist.

## Revendications

1. Procédé de reprise suite à la survenue d'une déconnexion anormale sur une ligne de communication entre une unité mains libres (100) et une unité de téléphonie mobile (200) pendant une communication téléphonique mains libres, ledit procédé comprenant :
la détection de la déconnexion anormale survenant pendant la communication téléphonique mains libres établie entre l'unité mains libres (100) et un poste téléphonique d'un partenaire de communication par connexion radio de l'unité mains libres (100) à l'unité de téléphonie mobile (200) et par connexion de l'unité de téléphonie mobile (200) au poste téléphonique du partenaire de communication via un réseau de communications (400), **caractérisé par**
la transmission d'un message de demande de nouvelle tentative d'appel automatique de l'unité de téléphonie mobile vers le poste téléphonique du partenaire de communication ou un terminal de communication associé audit poste téléphonique lorsque la déconnexion anormale est détectée ; et
le rappel automatique du poste téléphonique du partenaire de communication si le partenaire de communication n'effectue pas de nouvelle tentative d'appel une fois le temps spécifié écoulé après transmission du message.

2. Système de reprise suite à la survenue d'une déconnexion anormale sur une ligne de communication entre une unité mains libres (100) et une unité de téléphonie mobile (200) pendant une communication téléphonique mains libres, pour l'exécution d'une reprise suite à la déconnexion anormale survenue pendant la communication téléphonique mains libres établie entre l'unité mains libres (100) et un poste téléphonique d'un partenaire de communication par formation de la première ligne de communication entre l'unité mains libres (100) et l'unité de téléphonie mobile (200) et par formation d'une deuxième ligne de communication entre l'unité de téléphonie mobile (200) et le poste téléphonique du partenaire de communication via un réseau de communications (400), l'unité de téléphonie mobile (200) comprenant :
une unité de détection (216) destinée à détecter la déconnexion anormale sur la première ligne de communication, survenant pendant la communication téléphonique mains libres, **caractérisé en ce que** ledit système comprend en outre :
une unité de mémoire (217) destinée à mémoriser les informations à transmettre au poste téléphonique du partenaire de communication ou à un terminal de communication associé audit poste téléphonique ; et
une unité de reprise (204, 212, 213, 214, 216) destinée à transmettre un message de demande de nouvelle tentative d'appel automatique sur la base des informations mémorisées dans l'unité de mémoire (217) quand la déconnexion anormale est détectée par l'unité de détection (216), et à rappeler automatiquement le poste téléphonique du partenaire de communication si le partenaire de communication n'effectue pas de nouvelle tentative d'appel une fois le temps spécifié écoulé après transmission du message.

3. Dispositif téléphonique main libres, comprenant :
une unité mains libres (100) ; et
une unité de téléphonie mobile (200) connectée à l'unité mains libres (100) par une première ligne de communication et connectée à un poste téléphonique d'un partenaire de communication par une deuxième ligne de communication, laquelle comprend :
une unité de détection (216) destinée à détecter une déconnexion anormale sur la première ligne de communication, survenant pendant une communication téléphonique entre l'unité mains libres (100) et le poste téléphonique du partenaire de communication, **caractérisé en ce que** ledit dispositif comprend en outre :
une unité de mémoire (217) destinée à mémoriser les informations à transmettre au poste téléphonique du partenaire de communication ou à un terminal de communication associé audit poste téléphonique ; et
une unité de reprise (204, 212, 213, 214, 216) destinée à transmettre un message de demande de nouvelle tentative d'appel automatique sur la base des informations quand la déconnexion anormale sur la deuxième ligne de communication est détectée, et à rappeler automatiquement le poste téléphonique du partenaire de communication si le partenaire de communication si le partenaire de communication n'effectue pas de nouvelle tentative d'appel une fois le temps spécifié écoulé après transmission du message, la communication téléphonique étant établie entre l'unité mains libres (100) et le poste téléphonique du partenaire de communication par la première ligne de communication et la deuxième ligne de communication.

4. Programme de commande destiné à permettre l'exécution par un ordinateur d'un procédé de reprise au moment de la survenue d'une déconnexion anormale sur une ligne de communication entre une unité mains libres (100) et une unité de téléphonie mobile (200) pendant une communication téléphonique mains libres, ledit procédé comprenant :
la détection de la déconnexion anormale survenant pendant la communication téléphonique mains libres établie entre l'unité mains libres (100) et un poste téléphonique d'un partenaire de communication par connexion radio de l'unité mains libres (100) à l'unité de téléphonie mobile (200) et par connexion de l'unité de téléphonie mobile (200) au poste téléphonique du partenaire de communication via un réseau de communications (400), **caractérisé par**
la transmission d'un message de demande de nouvelle tentative d'appel automatique de l'unité de téléphonie mobile vers le poste téléphonique du partenaire de communication ou un terminal de communication associé audit poste téléphonique lorsque la déconnexion anormale est détectée ; et
le rappel automatique du poste téléphonique du partenaire de communication si le partenaire de communication n'effectue pas de nouvelle tentative d'appel une fois le temps spécifié écoulé après transmission du message.
